# EUROPEAN PATENT SPECIFICATION

(11) **EP 3 840 083 B1**
(45) Date of publication and mention of the grant of the patent: **26.01.2022**
(21) Application number: 19218474.5
(22) Date of filing: 20.12.2019
(51) Int. Cl.: H01M 50/325, H01M 50/333, H01M 10/42

(54) **THERMAL RUNAWAY DETECTION SYSTEM AND BATTERY SYSTEM**
SYSTEM ZUR DETEKTION VON THERMISCHEM DURCHGEHEN UND BATTERIESYSTEM
SYSTÈME DE DÉTECTION D'EMBALLEMENT THERMIQUE ET SYSTÈME DE BATTERIE

(43) Date of publication of application: 23.06.2021
(73) Proprietor: Samsung SDI Co., Ltd., Gyeonggi-do 17084 (KR)
(72) Inventor: Krois, Günter, 8010 Graz (AT); Haindl, Michael, 8230 Hartberg (AT); Altenburger, Florian, 8160 Weiz (AT)
(74) Representative: Gulde & Partner

(56) References cited:
- CN-A- 109 904 366
- DE-A1-102014 200 193
- US-A1- 2012 070 703
- US-A1- 2016 111 757

## Description

### Field of the Invention

The present disclosure relates to a thermal runaway detection system, particularly to a combination of a venting device and a thermal runaway detection circuit connected to the venting device and configured for detecting an abnormal overpressure in a battery system. Further, the present disclosure relates to a battery submodule, module or system comprising such a thermal runaway detection system and to a method for detecting a thermal runaway.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while highcapacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle.

Battery modules can be constructed either in block design or in modular design. In block designs, each battery cell is coupled to a common current collector structure and a common battery management system. In modular designs, pluralities of battery cells are connected to form submodules and several submodules are connected to form the battery module. Battery management functions may be realized either on module or submodule level and thus interchangeability of the components is improved. One or more battery modules are mechanically and electrically integrated, equipped with a thermal management system and set up for communication with one or more electrical consumers to form a battery system.

Either on battery submodule level, on battery module level or on battery system level a casing can be foreseen for enclosing all the components constituting the respective unit. To provide thermal control of the enclosed components a thermal management system may be used to efficiently emit, discharge and/or dissipate heat generated within the casing. If such thermal management system is omitted or the heat drain from the casing is not sufficiently performed, an increase of the internal temperature can lead to abnormal reactions occurring therein. An example of such abnormal operation condition is a thermal runaway of a battery cell that may be entered by strongly overheated or overcharged Lithium ion cell. The thermal runaway is a self-accelerating chemical reaction inside the cell, which produces high amounts of heat and gas, until all available material is exhausted. Due to high amounts of hydrogen and carbon monoxide within the produced gas, the produced gases may be toxic and flammable. Further, according to the high amounts of heat and gas, it might be necessary to relief pressure from the battery cells in order to prevent an explosion. Example disclosures with respect to pressure relief valves for battery systems or individual battery cells can be found in each of CN 109 904 366 A, US 2012/070703 A1, and US 2016/0111757 A1, respectively.

A thermal runaway will likely cause a thermal propagation along the battery cells of a battery module, which might eventually lead to a fire of the battery module. Hence, early detection of a thermal runaway in a battery module is essential for the timely initiation of countermeasures and/or the timely output of warning signals, e.g., to the passengers of an electric vehicle. However, so far the detection of thermal runaway is usually based on internal cell measurements, e.g., on measurements of cell voltage, cell current and/or cell temperature. In other words, so far not the thermal runaway itself but rather secondary effects related to a thermal runaway are detected within a battery module. Further, in order to avoid false warnings usually trigger thresholds are set which relate to a thermal propagation across at least two cells, i.e., by detecting abnormal cell voltages, currents and/or temperatures of at least two cells. However, these trigger thresholds are often based on specific battery system models, and hence might not be suitable for any battery module irrespective of its geometry.

It is thus an object of the present invention to overcome or reduce at least some of the drawbacks of the prior art and to provide a solution for thermal runaway detection that allows for reliably detecting thermal runaway itself rather than detecting secondary effects.

### Description of Invention

Aspects of the present disclosure overcome or at least reduce the disadvantageous of the prior art and solve at least one of the problems existing in the prior art to at least some extent.

According to a first aspect of the present invention, a thermal runaway detection system is provided that comprise a venting device and thermal runaway detection circuit. Therein, the venting device has a sealing body that is disposed in a venting passage, i.e., in a passage or opening that is configured to let pass venting gases in a thermal runaway of a battery cell. The sealing body is configured to close the venting passage in a first position of the sealing body and is configured to open the venting passage in a second position of the sealing body that is different from the first position. In the context of the present disclosure, a position of the sealing body refers to a spatial position of the sealing body without a change of state of the sealing body. Thus, the sealing body remains unaltered in the first and second position.

The thermal runaway detection system of the present disclosure further comprises a thermal runaway detection circuit that is configured for monitoring a position of the sealing body and for outputting a signal corresponding to the position. Therein, monitoring the position of the sealing body is either performed by the selective closing and opening of a conductive circuit based on a position of the sealing body as described in more detail below. However, the position of the sealing body may also be measured using optical and/or mechanical means. Exemplarily, a laser ray may be selectively interrupted based on a position of the sealing body and may be detected by a photodiode in a case wherein it is not interrupted. Hence, a signal output by the photodiode can be used to monitor the position of the sealing body. Also a capacitive measurement may be carried out for determining the position of the sealing body, wherein the sealing body might be configured as a movable plate of a capacitor. Above that also mechanical means, e.g., based on a gear rack or the like, may be used for determining the position of the sealing body. Depending on the used method for determining the position of the sealing body and adapted circuitry for outputting the signal may be used.

Usually a battery cell comprises a vent opening for allowing the gas produced in an abnormal operation condition to be released from the cell if a certain overpressure and/or a certain temperature inside the cell is exceeded. This vent opening is usually covered by a membrane or a notch that bursts open if a pressure inside the battery cell exceeds a predetermined pressure threshold. Thus, once the vent opening is opened it cannot close the cell housing again and the battery cell cannot be longer used and usually has to be disposed.

The casing of a battery submodule, battery module or battery system usually also encloses the components therein in an essentially gas tight manner and hence it is required to implement an opening in the submodule, module or system casing (housing) in order to prevent damage to the casing (housing) and its sealing due to the highly increased inside pressure. Such opening shall also allow for draining away the venting gases safely in order to protect persons from dangerous fumes and gases that may occur during thermal runaway (venting) or other dysfunctions of battery cells within the casing. For fast draining of vent gases the opening should be configured to open at a specified pressure inside the casing.

According to the present disclosure, the sealing body of such opening that is configured to affect the opened state or the closed state of such opening is advantageously used to determine a thermal runaway of at least one battery cell within the casing (housing). Hence, according to the present disclosure a thermal runaway, e.g., of a battery submodule, battery module or battery system disposed within the housing, can be determined almost immediately, i.e., with a very quick response time as the pressure rises immediately at a venting event of a battery cell within the housing. Further, the detection of a thermal runaway is preferably independent of internal battery measurements, such as e.g., measurements of voltage or temperature of a battery cell, which might be impaired by thermal propagation. Further, utilizing the opening state of a venting device for thermal runaway detection advantageously provides a very low risk of false warnings of thermal runaway, as common venting devices are configured to open only due to a sufficient overpressure from the inside.

The thermal runaway detection circuit of the thermal runaways detection system comprises a first detection node that is connected to the venting device and a second detection node that is connected to the venting device. In other words, a conductive path is formed of the first and second detection node of the thermal runaway detection circuit, respectively, and the venting device. The venting device preferably comprises a first and second contact node, e.g., contact pads, for enabling the contact to the detection nodes.

According to the present disclosure, a conductible path between the first detection node and the second detection node is set conductive via the sealing body in one of the first position and the second position. Hence, the conductible path between the first and second detection node is set non-conductive in the other one of the first position and the second position of the sealing body. In other words, the conductivity of the conductible path depends on whether or not the sealing body opens or closes, i.e., seals, the venting passage. Hence, the conductivity of the conductible path indicates whether or not the venting passage is opened or closed.

The thermal runaway detection circuit of the present disclosure further comprises a controller that is configured to detect the conductivity of the conductible path and to output a signal corresponding to the conductivity of the conductible path. Preferably, the controller is configured to measure a voltage and/or current on the conductible path or is configured to control means for measuring a voltage and/or current on the conductible path. The controller is further preferably configured to determine the conductivity of the conductible path based on obtained measurement signals on the voltage and/or current on the conductible path. The signal corresponding to the conductivity of the conductible path generated by the controller preferably takes different values for different conductivity states of the conductible path. Therein, a value of the signal may correspond to the conductivity in absolute numbers, i.e., might be a measure of the conductivity. Alternatively, the signal may take a first value for a conductivity below a predefined threshold and a second value for a conductivity above a predefined threshold. Further, preferred one of the first and second value might be zero.

In a preferred embodiment of the present disclosure, the sealing body is moveable from the first position to the second position in a reversible manner. Hence, once the pressure drops again below the pressure threshold, the sealing body transfers back to the first position for closing the venting passage. Hence, during a normal operation state, the venting device closes the venting passage to ensure protection from environmental influences. Hence, even if the sealing body transferred to the second position for allowing vent gases to be emitted via the venting passage, thermal runaway detection system can be reused afterwards.

According to the invention, the venting device is disposed in a housing, such as e.g., the housing of a battery submodule, a battery module or a battery system. According to this embodiment, the venting device is preferably configured to transition, i.e., to be transferred, from the first position to the second position when a pressure within the housing exceeds a predefined pressure threshold. Hence, as the venting device preferably is reversibly transferable between the first and second position, the casing (housing) can even be used after the occasion of a venting event of at least one battery cell within the housing. Also, the sealing body advantageously allows protecting the inside of the casing (housing) from environmental influences while it is in the first state of closing the venting passage.

In a particularly preferred embodiment of the present invention, the conductible path between the first detection node and the second detection node is set conductive via the sealing body in the first position. In other words, while the sealing body closes the venting passage at the same time the sealing body provides an electric closure to the conductible path. In other words, the conductible path is set non-conductive in the second position of the sealing body. According to this embodiment, contact areas between the sealing body and a corresponding sealing surface against which the sealing body abuts for sealing the venting passage are preferably formed as electric contacts. Further preferred according to this embodiment, the sealing body comprises is electrically conductive or comprises an electrically conductive path. Hence, when the sealing body seals the venting passage and abuts against the contact areas it at the same time closes the conductible path between the first and second detection node. Particularly preferred, the sealing body is a valve plate and the venting device further preferably comprises a spring for pushing the valve plate in the second (closed) position. Further preferred, the sealing body is an electrically conducting part of the conductible path, at least while the sealing body is in the first position for closing the venting passage. In other words, the sealing body electrically closes the conductible path while it is in the first position. According to the invention, the thermal runaway detection circuit has a first power input connected to a first cell terminal of at least one battery cell and has a second power input connected to a second cell terminal of at least one battery cell. Preferred, in this embodiment this at least one battery cell is the same battery cell, the venting of which effects a transition of the sealing body from the first position into the second position. In other words, according to this embodiment the thermal runaway detection circuit, particularly the controller thereof, is selfsupplied by the at least one battery cell that is supervised by the thermal runaway detection system. The controller is connected to the first power input and to the second power input further the controller is powered via the at least one battery cell.

Further preferred, the first detection node of the circuit is connected to the first power input and the second detection node of the circuit is connected to the second power input. Therein, the first detection node of the circuit is preferably connected to the first power input via the controller or independently of the controller. Further, the second detection node of the circuit is preferably connected to the second power input via the controller or independently of the controller.

Further, the first detection node preferably differs from the first power input and the second detection node preferably differs from the second power input. Particularly preferred, the power supply of the controller via the first power input and second power input is independent of the conductivity state of the conductible path. In other words, the controller and the conductible path (i.e., the venting device with the sealing body) are connected in parallel to each other with respect to the at least one battery cell operating as power supply.

Further preferred, the controller of the thermal runaway detection system, particularly of the thermal runaway detection circuit, is configured to output the signal while the conductible path is set conductive. According to this embodiment, while the controller detects a property of the conductible path, i.e., a voltage or current along the conductible path, a signal corresponding to this property is high in the controller. Advantageously such high signal in the controller is then output or at least used to output the signal indicative of the conductivity of the conductible path. In other words, the controller of this embodiment might detect a signal corresponding to the conductivity of the conductible path in determining this conductivity and at the same time outputs this signal corresponding to the conductivity of the conductible path. In this embodiment, the circuitry of the controller might advantageously be simple.

In an alternative embodiment, the controller is configured to output the signal when a current across the conductible path falls below a predetermined current threshold. According to such embodiment, the controller is preferably configured to detect a current across the conductible path and is further configured to compare this measured current with a preset current. Such comparison might be performed using a comparator or the like. Particularly preferred, according to this embodiment of the invention the thermal runaway detection system further comprises a shunt resistor that is interconnected between the first power input and the first detection node or between the second power input and the second detection node. In other words, the shunt resistor is preferably integrated into an extension of the conductible path on the thermal runaway detection circuit, preferably on a substrate carrier carrying this circuit. According to this embodiment, the controller is further preferably configured to detect a voltage drop over the shunt resistor and to determine a current along the conductible path based on the voltage drop detected over the shunt resistor. In this embodiment, the controller may be connected to a node upstream the shunt to tap a voltage upstream the shunt and to another node downstream the shunt resistor in order to tap a voltage downstream the shunt.

The electronic or electric devices and/or any other relevant devices or components according to embodiments of the present disclosure may be implemented utilizing any suitable hardware, firmware (e.g. ASIC), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein.

The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

Another aspect of the present invention relates to a battery submodule that comprises a plurality of aligned battery cells. The battery submodule further comprises a submodule housing that is enclosing the plurality of aligned battery cells. The battery submodule further comprises the claimed thermal runaway detection system as described above, wherein the venting device is disposed in the venting passage of the battery submodule housing. The preferred embodiments of the battery submodule correspond to the preferred embodiments of the thermal runaway detection system as described above. In other words, the venting passage of the thermal runaway detection system of the present disclosure connects the interior of the battery submodule housing with the exterior of the battery submodule housing in dependence of the position of the sealing body being one of the first or second positions.

Another aspect of the present invention relates to a battery module that comprises a plurality of battery submodules, each battery submodule comprising a plurality of aligned battery cells. Particularly preferred, the battery module comprises a plurality of battery submodules according to the present disclosure as described above. The battery module further comprises a module housing enclosing the battery submodules and the thermal runaway detection system of the present disclosure as described above. Therein, the venting device is disposed in the venting passage of the battery module housing. In other words, the venting passage of the thermal runaway detection system of the present disclosure connects the interior of the battery module housing with the exterior of the battery module housing in dependence of the position of the sealing body being one of the first or second positions. Preferred embodiments of the battery module correspond to the preferred embodiments of the thermal runaway detection system as described above.

Another aspect of the present invention relates to a battery system that comprises at least one battery module and a system controller configured for operating the at least one battery module. The system controller preferably is a battery management system configured detecting states of the battery cells of the battery module, performing balancing of the cells and/or for establishing a communication connection with external loads or the like. The battery module preferably comprises at least one battery submodule, each battery submodule having a plurality of aligned battery cells stacked together. The battery system further comprises a system housing and the thermal runaway detection system of the present disclosure as described above. Therein, the venting device is disposed in the venting passage of the battery system housing. In other words, the venting passage of the thermal runaway detection system of the present disclosure connects the interior of the battery system housing with the exterior of the battery system housing in dependence of the position of the sealing body being one of the first or second positions, particularly in the first position. Preferred embodiments of the battery system correspond to the preferred embodiments of the thermal runaway detection system as described above.

Another aspect of the present invention is directed to a vehicle that comprises a battery submodule as described above, a battery module as described above and/or a battery system as described above and further comprises at least one vehicle control unit that is configured to receive the signal that is output from the controller and corresponds to the conductivity state of the conductible path. The vehicle preferably comprises at least one output means, wherein the vehicle control unit is further configured to control the output means to output a warning to a passenger based on the received signal. The output means of the vehicle preferably comprises a display for outputting a visual warning to a passenger. Alternatively or additionally the output means of the vehicle comprise a speaker for outputting an audible warning to a passenger for warning the passenger. Above that the output means may comprise means for providing a haptic warning to a passenger, such as e.g., a vibration. Preferred embodiments of the vehicle correspond to the preferred embodiments of the vehicle as described above.

Another aspect of the present invention relates to a method for detecting a thermal runaway of at least one battery cell of a plurality of battery cells disposed within a housing, wherein a venting device with a sealing body is disposed in a venting passage of the housing. Therein the sealing body is configured to close the venting passage in a first position and to open the venting passage in a second position different from the first position in response to a predefined pressure within the housing. Further, the sealing body is configured to set a conductible path conductive in one of the first state and the second state and to set the conductible path non-conductive in the other state. The method of the present disclosure then comprises the step of detecting, via a controller that is configured to detect a conductivity of the conductible path, a conductive state of the conductible path and of outputting a first signal. The method of the present disclosure further comprises the step of detecting, via the controller a non-conductive state of the conductible path and outputting a second signal. Therein, one of the first and second signals indicates a thermal runaway of a battery cell.

In a preferred embodiment, the method of the present disclosure further comprises the steps of outputting a warning and/or performing at least one countermeasure in response to the signal indicating a thermal runaway. As described above with respect to the vehicle of the present disclosure, the warning may be output via at least one output means, e.g., of an electric vehicle. The countermeasure may comprise shutting down at least one, preferably all, of the plurality of battery cells and/or emitting a fire extinguishing (and or cooling) substance to one, preferably all, of the plurality of battery cells. Further preferred, the countermeasure may comprise increasing the cooling performance of a cooling system of the at least one battery cell and/or activating means for increasing thermal conductivity between the plurality of battery cells, e.g., by activating additional ventilation means, such as ventilation fans. The method of the present disclosure further preferably comprises the step of stopping the output of the warning and/or the performance of the countermeasure in response to the other signal that is not indicating a thermal runaway. Therein, the warning and/or the countermeasure is preferably one of those warning and countermeasures as described above.

Another aspect of the present disclosure relates to a computer program comprising instructions which, when the program is executed by a controller of a thermal runaway detection system as described above, cause the controller to carry out the steps of the method of the present disclosure as described above. Therein, the controller may control other elements of the thermal runaway detection system for carrying out steps of the method. Another aspects and advantages of the system and method of the present disclosure might be learned by learned by the following description of the drawings and the dependent claims.

### Brief Description of the Drawings

Features will become apparent to those of ordinary skill in the art by describing in detail exemplary embodiments with reference to the attached drawings in which:
- Fig. 1: schematically illustrates a battery module according to an embodiment;
- Fig. 2: schematically illustrates a thermal runaway detection circuit according to an example;
- Fig. 3: schematically illustrates a venting device according to a first example; and
- Fig. 4: schematically illustrates a venting device according to a second example.

### Detailed Description of the Drawings

Reference will now be made in detail to embodiments, examples of which are illustrated in the drawings, and effects and features of the exemplary embodiments will be described with reference to the accompanying drawings. In the drawings, like reference numerals denote like elements, and redundant descriptions of same reference numerals will be omitted. Features of the inventive concept and methods of accomplishing the same may be understood more readily by reference to the following detailed description of embodiments and the accompanying drawings. The present invention, however, may be embodied in various different forms, and should not be construed as being limited to the illustrated embodiments.

As used herein, the term "and/or" includes any and all combinations of one or more of the associated listed items. Further, the use of "may" when describing embodiments of the present invention refers to "one or more embodiments of the present invention." It will be understood that although the terms "first" and "second" are used to describe various elements, these elements should not be limited by these terms. These terms are only used to distinguish one element from another element. For example, a first element may be named a second element and, similarly, a second element may be named a first element.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures.

It will be understood that when an element or layer is referred to as being "on," "connected to," or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

Unless otherwise defined, all terms (also technical and scientific terms) used herein have the same meaning as commonly understood by one of ordinary skill in the art. It will be further understood that terms, such as those defined in common dictionaries, should be interpreted as having a meaning that is consistent with their meaning in the context of the relevant art and/or the present specification, and should not be interpreted idealized or overly formal.

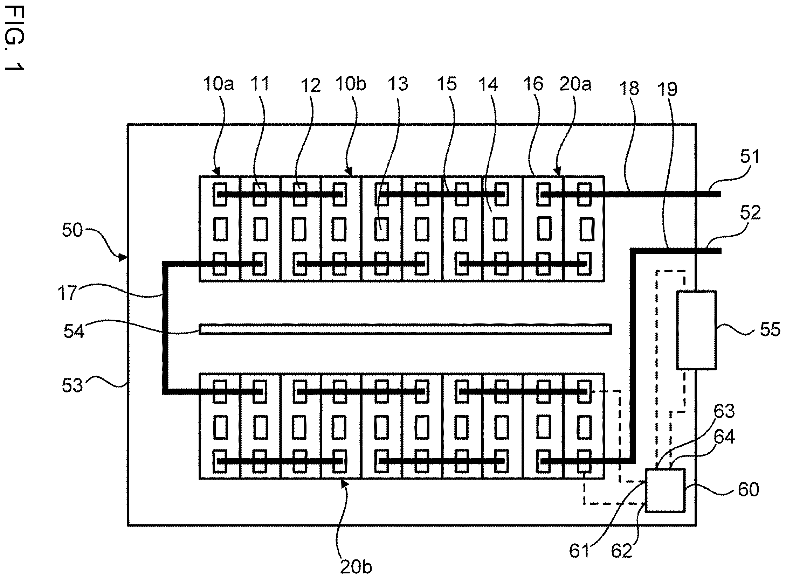

Figure 1 is a perspective view illustrating a battery module 50 according to an embodiment. The battery module 50 illustrated in Figure 1 might be a battery module 50 as utilized in an electric vehicle. The battery module 50 comprises a housing 53 with four lateral exterior walls and a single linearly extended partition wall 54 arranged at a center of the housing 53. The housing 53 may be closed by a top cover (not shown) and is an essentially gastight housing.

The partition wall 54 divides the housing 53 in two submodule compartments. Battery submodules 20 are arranged in both of the submodule compartments. Each of the battery submodules 20 comprises ten aligned battery cells 10 that are stacked in a stacking direction with their wide side surfaces facing each other. The stacking direction of the battery submodules 20 is also the longitudinal direction of the battery module 20 along which the battery module 20 has its largest extension. The battery submodules 20 are positioned in the cell compartments with their longitudinal direction essentially parallel to the partition wall 54. In the following a first battery submodule 20a is described, the configuration of which is identical to the second battery submodule 20b also forming part of battery module 50.

The first battery submodule 10a comprises ten battery cells 10 and each of the battery cells 10 of the first battery submodule 10a includes an electrode assembly accommodated in a case 16 together with an electrolyte. Particularly, the case 16 of each battery cell 10 has a substantially cuboidal or prismatic shape and is formed of a metal, such as aluminum. Each battery cell 10 comprises a cap assembly 14 for sealing an opening of the case 16. Each cap assembly 14 includes a cap plate for covering the opening of the case 16, a first cell terminal 11 (positive terminal) and a second cell terminal 12 (negative terminal). The cell terminals protruded 11, 12 from the cap assembly 14. The cap assembly 14 comprises a vent 13 which has a vent opening that is covered by a membrane or a notch. The membrane or notch is configured to open in response to a certain overpressure within the battery cell 10.

The battery cells 10 of the first battery submodule 20a are connected to each other via busbars 15 in a 2p5s configuration. The battery cells 10 of the second battery submodule 20b are connected to each other via busbars 15 in the same configuration. Each busbar 15 connects two first cell terminals 11 of first battery cells 10a with two second cell terminals 12 of second battery cells 10b, i.e. each busbar connects a total of four cell terminals 11, 12.

Further, the first battery submodule 20a is connected to the second battery submodule 20b via an interconnector (busbar) 17, wherein the interconnector 17 interconnects first terminals 11 of the second battery submodule 20b with two second terminals 12 of the first battery submodule 20a. Further, two first cell terminals of the first battery submodule 20a are connected to a first module terminal 51 (positive terminal) via a first terminal connector 18 and two second cell terminals 12 of the second battery submodule 20b are connected to a second module terminal 52 (negative terminal) via a second terminal connector 19. A high current path is formed by the busbars 15, the interconnector 17 and the terminal connectors 18, 19. This high current path extends from the first module terminal 51 along the battery cells 10 of the battery submodules 20a, 20b to the second module terminal 52.

The battery module 50 further comprises a thermal runaway detection system according to an embodiment. Particularly, the battery module 50 comprises a venting device 55 that is disposed in a lateral exterior wall of housing 53 of battery module 50. Further, the battery module 50 comprises a thermal runaway detection circuit 60. The thermal runaway detection circuit 60 comprises a first power input 61 connected to first terminals of cells of the second battery module 20b and further comprises a second power input 62 connected to second terminals of cells of the first battery module 20a. Hence, the thermal runaway detection circuit 60 is power supplied by the at least part of the battery module 50. The thermal runaway detection circuit 60 further comprises a first detection node 63 connected to the venting device 55 and a second detection node 64 also connected to the venting device 55. The venting device 55 comprises a sealing body (not shown) configured to seal a venting passageway in the exterior lateral wall of the battery module 50 depending on its positions. Further, the thermal runaway detection circuit 60 is configured to monitor the position of the sealing body via the first detection node 63 and the second detection node 64. Based on the monitored position of the sealing body, the thermal runaway detection circuit 60 outputs a signal (not shown) that is indicative of the position of the sealing body. Thus, based on the signal output by thermal runaway detection circuit 60 a thermal runaway is reliably detected.

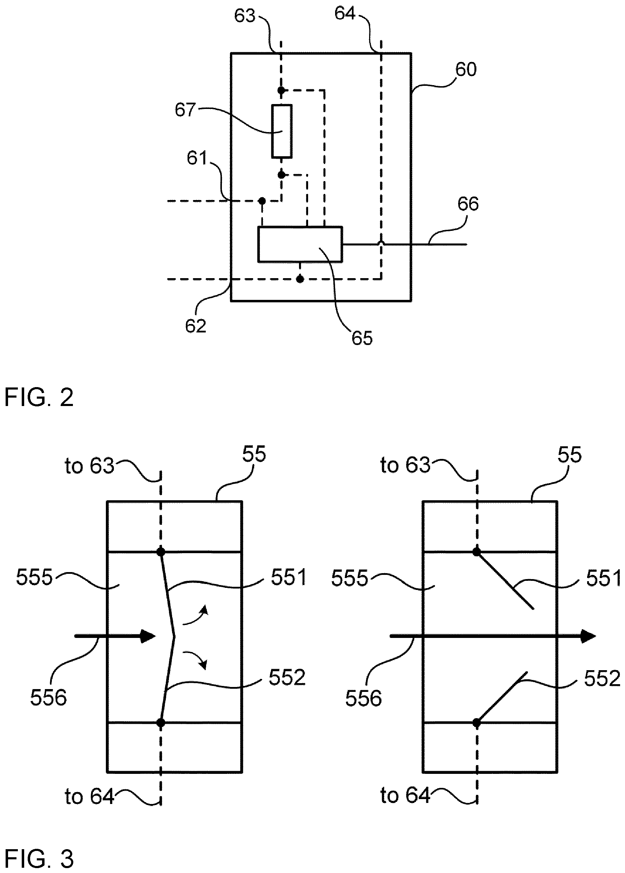

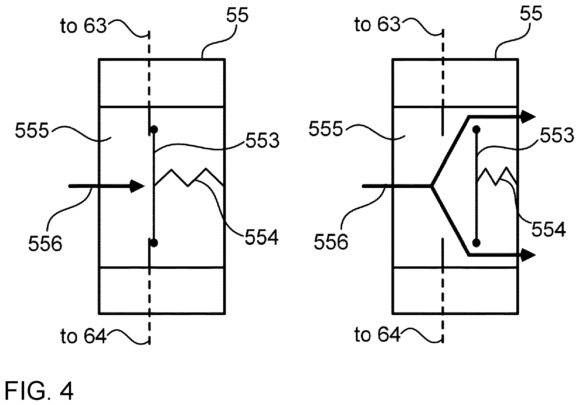

A preferred embodiment of the thermal runaway detection circuit 60 is schematically illustrated in Figure 2 and preferred embodiments of the venting device 55 are schematically illustrated in Figures 3 and 4, respectively. In the following these preferred embodiments are described with respect to the integration in the battery module 50 of Figure 1. However, the preferred embodiments of the thermal runaway detection circuit 60 and the venting device 55 may also be used independently of a battery module 50 of Figure 1, e.g., in a battery system.

As schematically illustrated in Figure 2, the thermal runaway detection circuit 60 comprises a conductive path (shown as dashed line) that connects the first power input 61 and the first detection node 63. The thermal runaway detection circuit 60 further comprises another conductive path (also shown as dashed line) that connects the second power input 62 and the second detection node 64. Further, a controller 65 is interconnected between these conductive paths and is hence connected to the first and second power inputs 61, 62. The controller 65 is thus power supplied by the second battery submodule 20b of Figure 1. Further, a shunt resistor 67 is disposed in the conductive path between the first power input 61 and the first detection node 63. The controller 65 is connected to a first voltage measurement node downstream the shunt resistor 67 and to a second voltage measurement node upstream the shunt resistor 67. The controller 65 can thus tap a first voltage downstream the shunt resistor 67 and a second voltage upstream the shunt resistor 67 and can thus determine a voltage drop over the shunt resistor 67. Based on a known resistivity of the shunt resistor 67 the controller 65 then determines a current through shunt resistor 67 and hence a current through the first detection node 63. As the first detection node 63 and the second detection node 64 are connected via venting device 55 as illustrated in Figure 1, the current of through the first detection node 63 is also indicative for the current through the venting device 55 and can thus be used for monitoring a position of a sealing body. This will be explained in more detail with respect to the exemplary embodiments of Figures 3 and 4.

As schematically illustrated in Figure 3, the venting device 55 comprises a venting passage 555 that is connecting an interior and an exterior of the housing 53. The venting passage 555 is selectively opened or closed based on the positions of a first sealing body 551 and of a second sealing body 552. Each of the sealing bodies 551, 552 is connected to a lateral wall of the venting passage via a respective torsion spring (not shown).

The torsion springs are pre-stressed such that the first and second sealing body 551, 552 abut against each other for closing the venting passage 555 in a first position as illustrated in the left part of Figure 3. Further, each of the first and second sealing body 551, 552 is made of a conductive material, preferably aluminum. Further, the first sealing body 551 is connected to the first detection node 63 and the second sealing body 552 is connected to the second detection node 64. Hence, when the first and second sealing body 551, 552 abut against each other a conductible path between the first detection node 63 and the first detection node 64 is closed via the first and second sealing bodies 551, 552.

When a pressure inside the housing 53 exceeds a predefined threshold, the first and second sealing bodies 551, 552 are moved against the spring force exerted by the respective torsion spring into a second position as illustrated in the right part of Figure 3. In this second position, the first and second sealing bodies 551, 552 do not abut against each other anymore but open the venting passage 555 and thus allow a venting gas 556 emitted by at least one of the battery cells 10 in the housing 53 to exit the housing 53 via the gas passageway 555. At the same time, the conductible path between the first and second detection nodes 63 and 64 is opened, i.e., set non-conductive, such that the thermal runaway detection circuit 60 (see e.g., Figure 2) can detect the second position of the first and second sealing bodies 551, 552 and output a signal 66 that is indicative of that the first and second sealing bodies 551, 552 are in a second position and that thus a venting event connected to a thermal runaway occurred.

Another preferred embodiment of venting device 55 is schematically illustrated in Figure 4. Therein, the venting device 55 comprises a single sealing body 553 that is pressed by a linear spring 554 to contact areas of the venting device 55 for closing a venting passage 555. The venting passage 555 is closed in such first position of the sealing body 553 as illustrated in the left part of Figure 5 and a venting gas 556 can not be emitted from the housing 53. As the same time, a conductible path between the first detection node 63 and the second detection node 64 is closed by the conductive sealing body 553 as shown in Figure 4.

However, when the pressure inside the housing 53 exceeds a predetermined value and force exerted by this pressure on the sealing body 553 exceeds a force exerted by the spring 554, the sealing body 553 is moved from the first position to a second position as illustrated in the right side of Figure 4. In the second position, the venting passage 555 is opened and hence a venting gas 556 emitted by at least one of the battery cells 10 in the housing 53 can be emitted from the housing 53 via the gas passageway 555. At the same time, the conductible path between the first and second detection nodes 63 and 64 is opened, i.e., set non-conductive, such that the thermal runaway detection circuit 60 (see e.g., Figure 2) can detect the second position of the sealing body 553 and output a signal 66 that is indicative of such second position and that thus a venting event connected to a thermal runaway has occurred.

### Reference signs

- 10: battery cell
- 11: first cell terminal (positive cell terminal)
- 12: second cell terminal (negative cell terminal)
- 13: vent
- 14: cap assembly
- 15: busbar
- 16: housing
- 17: submodule interconnector
- 18: first terminal connector
- 19: second terminal connector
- 20: battery submodule
- 50: battery module
- 51: first module terminal (positive terminal)
- 52: second module terminal (negative terminal)
- 53: housing
- 54: partition wall
- 55: venting device
- 551: first swiveling sealing body
- 552: second swiveling sealing body
- 553: movable sealing body
- 554: spring
- 555: venting passage
- 556: venting gas flow
- 60: thermal runaway detection circuit
- 61: first power input
- 62: second power input
- 63: first detection node
- 64: second detection node
- 65: controller
- 66: signal output
- 67: shunt resistor

## Claims

1. Thermal runaway detection system, comprising:
a venting device (55) with a sealing body (551, 552, 553) disposed in a venting passage (555) in a housing (50, 53) of a battery submodule, a battery module or a battery system enclosing at least one battery cell (10), the sealing body (551, 552, 553) being configured to close the venting passage (555) in a first position and to open the venting passage (555) in a second position different from the first position, wherein the sealing body (551, 552, 553) is moveable from the first position to the second position in a reversible manner; and
a thermal runaway detection circuit (60) configured for monitoring a position of the sealing body (551, 552, 553) and for outputting a signal corresponding to the position, the thermal runaway detection circuit (60) comprising:
a first detection node (63) connected to the venting device (55) and a second detection node (64) connected to the venting device (55), wherein a conductible path between the first detection node (63) and the second detection node (64) is set conductive via the sealing body (551, 552, 553) in one of the first position and the second position, and
a controller (65) configured to detect the conductivity of the conductible path and to output the signal corresponding to the conductivity of the conductible path,
wherein the thermal runaway detection circuit (60) comprises a first power input (61) connected to a first cell terminal (11) of the at least one battery cell (10) and a second power input (62) connected to a second cell terminal (12) of the at least one battery cell (10) and wherein the first detection node (63) is connected to the first power input (61) and the second detection node (64) connected to the second power input (62), and
wherein the controller (65) is connected to the first power input (61) and to the second power input (62) and is powered via the at least one battery cell (10).

2. Thermal runaway detection system according to claim 1, wherein the venting device (55) is configured to transition from the first position to the second position when a pressure within the housing (50) exceeds a predefined pressure threshold.

3. Thermal runaway detection system according to claim 1 or 2, wherein the conductible path between the first detection node (63) and the second detection node (64) is set conductive via the sealing body (551, 552, 553) in the first position and wherein the conductible path is set non-conductive in the second position.

4. Thermal runaway detection system according to any one of the preceding claims, wherein the controller (65) is configured to output the signal while the conductible path is set conductive or wherein the controller (65) is configured to output the signal when a current across the conductible path falls below a predetermined current threshold.

5. Thermal runaway detection system according to any one of the preceding claims, further comprising a shunt resistor (67) that is interconnected between the first power input (61) and the first detection node (63) or between the second power input (62) and the second detection node (64) and wherein the controller (65) is further configured to detect a voltage drop over the shunt resistor (67).

6. Battery submodule (20), comprising a plurality of aligned battery cells (10) and submodule housing enclosing the aligned battery cells (120) and the thermal runaway detection system of any one of the claims 1 to 5, wherein the venting device (55) is disposed in the venting passage of the battery submodule housing.

7. Battery module (50), comprising a plurality of battery submodules (20a, 20b) and a module housing (53) and the thermal runaway detection system of any one of the claims 1 to 5, wherein the venting device (55) is disposed in the venting passage (555) of the battery module housing (53).

8. Battery system, comprising a plurality of battery modules (50) and a system housing and the thermal runaway detection system of any one of the claims 1 to 5, wherein the venting device (55) is disposed in the venting passage of the battery system housing.

9. Vehicle, comprising a battery submodule (20a, 20b) according to claim 6, a battery module (50) according to claim 7 and/or a battery system according to claim 8 and further comprising at least one vehicle control unit configured to receive the signal output from the controller (65) and at least one output means, wherein the vehicle control unit is further configured to control the output means to output a warning to a passenger based on the received signal.

10. Method for detecting a thermal runaway of at least one battery cell (10) of a plurality of battery cells disposed within a housing (53), wherein a venting device (55) with a sealing body (551, 552, 553) is disposed in a venting passage (555) of the housing (53), wherein the sealing body (551, 552, 553) is configured to close the venting passage (555) in a first position and to open the venting passage (555) in a second position different from the first position in response to a predefined pressure within the housing (53), wherein the sealing body (551, 552, 553) is moveable from the first position to the second position in a reversible manner, and wherein the sealing body (551, 552, 553) is configured to set a conductible path conductive in one of the first state and the second state and to set the conductible path non-conductive in the other state, the method comprising the steps of:
Detecting, via a controller (65) configured to detect a conductivity of the conductible path, a conductive state of the conductible path and outputting a first signal, and Detecting, via the controller (65) a non-conductive state of the conductible path and outputting a second signal, wherein one of the first signal and the second signal is indicating a thermal runaway of at least one battery cell (10)
Performing at least one countermeasure in response to the signal indicating a thermal runaway, and
Stopping the performance of the countermeasure in response to the other signal not indicating a thermal runaway.

11. Computer program comprising instructions which, when the program is executed by a controller (65) of a thermal runaway detection system of any one of claims 1 to 5, cause the controller to carry out the steps of the method of claim 10.

## Patentansprüche

1. System zur Detektion von thermischem Durchgehen, aufweisend:
eine Entlüftungsvorrichtung (55) mit einem Dichtungskörper (551, 552, 553), der in einem Entlüftungsdurchgang (555) in einem Gehäuse (50, 53) eines Batterieuntermoduls, eines Batteriemoduls oder eines Batteriesystems, das zumindest eine Batteriezelle (10) umschließt, angeordnet ist, wobei der Dichtungskörper (551, 552, 553) konfiguriert ist, um den Entlüftungsdurchgang (555) in einer ersten Position zu schließen und den Entlüftungsdurchgang (555) in einer zweiten Position, die von der ersten Position verschieden ist, zu öffnen, wobei der Dichtungskörper (551, 552, 553) auf reversible Weise von der ersten Position in die zweite Position bewegt werden kann; und
eine Schaltung (60) zur Detektion von thermischem Durchgehen, die konfiguriert ist, um eine Position des Dichtungskörpers (551, 552, 553) zu überwachen und um ein der Position entsprechendes Signal auszugeben, wobei die Schaltung (60) zur Detektion von thermischem Durchgehen Folgendes aufweist:
einen ersten Detektionsknoten (63), der mit der Entlüftungsvorrichtung (55) verbunden ist, und einen zweiten Detektionsknoten (64), der mit der Entlüftungsvorrichtung (55) verbunden ist, wobei ein leitfähiger Pfad zwischen dem ersten Detektionsknoten (63) und dem zweiten Detektionsknoten (64) mittels des Dichtungskörpers (551, 552, 553) in einer der ersten Position und der zweiten Position leitend eingestellt wird, und
eine Steuerung (65), die konfiguriert ist, um die Leitfähigkeit des leitfähigen Pfads zu erfassen und das der Leitfähigkeit des leitfähigen Pfads entsprechende Signal auszugeben,
wobei die Schaltung (60) zur Detektion von thermischem Durchgehen einen ersten Stromeingang (61), der mit einem ersten Zellenanschluss (11) der zumindest einen Batteriezelle (10) verbunden ist, und einen zweiten Stromeingang (62), der mit einem zweiten Zellenanschluss (12) der zumindest einen Batteriezelle (10) verbunden ist, aufweist und wobei der erste Detektionsknoten (63) mit dem ersten Stromeingang (61) verbunden ist und der zweite Detektionsknoten (64) mit dem zweiten Stromeingang (62) verbunden ist, und
wobei die Steuerung (65) mit dem ersten Stromeingang (61) und dem zweiten
Stromeingang (62) verbunden ist und über die zumindest eine Batteriezelle (10) versorgt wird.

2. System zur Detektion von thermischem Durchgehen nach Anspruch 1, wobei die Entlüftungsvorrichtung (55) konfiguriert ist, um von der ersten Position in die zweite Position überzugehen, wenn ein Druck im Gehäuse (50) eine vorgegebene Druckschwelle überschreitet.

3. System zur Detektion von thermischem Durchgehen nach Anspruch 1 oder 2, wobei der leitfähige Pfad zwischen dem ersten Detektionsknoten (63) und dem zweiten Detektionsknoten (64) mittels des Dichtungskörpers (551, 552, 553) in der ersten Position leitend eingestellt wird und wobei der leitfähige Pfad in der zweiten Position nicht-leitend eingestellt wird.

4. System zur Detektion von thermischem Durchgehen nach einem der vorhergehenden Ansprüche, wobei die Steuerung (65) konfiguriert ist, um das Signal auszugeben, während der leitfähige Pfad leitend eingestellt ist, oder wobei die Steuerung (65) konfiguriert ist, um das Signal auszugeben, wenn ein Strom über den leitfähigen Pfad unter eine vorbestimmte Stromschwelle fällt.

5. System zur Detektion von thermischem Durchgehen nach einem der vorhergehenden Ansprüche, ferner aufweisend einen Shunt-Widerstand (67), der zwischen den ersten Stromeingang (61) und den ersten Detektionsknoten (63) oder zwischen den zweiten Stromeingang (62) und den zweiten Detektionsknoten (64) geschaltet ist, und wobei die Steuerung (65) ferner konfiguriert ist, um einen Spannungsabfall über dem Shunt-Widerstand (67) zu erfassen.

6. Batterieuntermodul (20), aufweisend eine Vielzahl ausgerichteter Batteriezellen (10) und ein Untermodulgehäuse, das die ausgerichteten Batteriezellen (120) umschließt, und das System zur Detektion von thermischem Durchgehen nach einem der Ansprüche 1 bis 5, wobei die Entlüftungsvorrichtung (55) im Entlüftungsdurchgang des Batterieuntermodulgehäuses angeordnet ist.

7. Batteriemodul (50), aufweisend eine Vielzahl von Batterieuntermodulen (20a, 20b) und ein Modulgehäuse (53) und das System zur Detektion von thermischem Durchgehen nach einem der Ansprüche 1 bis 5, wobei die Entlüftungsvorrichtung (55) im Entlüftungsdurchgang (555) des Batteriemodulgehäuses (53) angeordnet ist.

8. Batteriesystem, aufweisend eine Vielzahl von Batteriemodulen (50) und ein Systemgehäuse und das System zur Detektion von thermischem Durchgehen nach einem der Ansprüche 1 bis 5, wobei die Entlüftungsvorrichtung (55) im Entlüftungsdurchgang des Batteriesystemgehäuses angeordnet ist.

9. Fahrzeug, aufweisend ein Batterieuntermodul (20a, 20b) nach Anspruch 6, ein Batteriemodul (50) nach Anspruch 7 und/oder ein Batteriesystem nach Anspruch 8 und ferner aufweisend zumindest eine Fahrzeugsteuerungseinheit, die konfiguriert ist, um das von der Steuerung (65) ausgegebene Signal zu empfangen, und zumindest ein Ausgabemittel, wobei die Fahrzeugsteuerungseinheit ferner konfiguriert ist, um das Ausgabemittel zu steuern, sodass es eine Warnung an einen Fahrzeuginsassen basierend auf dem empfangenen Signal ausgibt.

10. Verfahren zur Detektion eines thermischen Durchgehens zumindest einer Batteriezelle (10) einer Vielzahl von Batteriezellen, die in einem Gehäuse (53) angeordnet sind, wobei eine Entlüftungsvorrichtung (55) mit einem Dichtungskörper (551, 552, 553) in einem Entlüftungsdurchgang (555) des Gehäuses (53) angeordnet ist, wobei der Dichtungskörper (551, 552, 553) konfiguriert ist, um in Reaktion auf einen vorgegebenen Druck im Gehäuse (53) den Entlüftungsdurchgang (555) in einer ersten Position zu schließen und den Entlüftungsdurchgang (555) in einer zweiten Position, die von der ersten Position verschieden ist, zu öffnen, wobei der Dichtungskörper (551, 552, 553) auf reversible Weise von der ersten Position in die zweite Position bewegt werden kann, und wobei der Dichtungskörper (551, 552, 553) konfiguriert ist, um einen leitfähigen Pfad in einem des ersten Zustands und des zweiten Zustands leitend einzustellen, und um den leitfähigen Pfad im anderen Zustand nicht-leitend einzustellen, wobei das Verfahren die folgenden Schritte aufweist:
Erfassen, mittels einer Steuerung (65), die konfiguriert ist, um eine Leitfähigkeit des leitfähigen Pfads zu erfassen, eines leitenden Zustands des leitfähigen Pfads und Ausgeben eines ersten Signals, und
Erfassen, mittels der Steuerung (65), eines nicht-leitenden Zustands des leitfähigen Pfads und Ausgeben eines zweiten Signals, wobei eines des ersten Signals und des zweiten Signals ein thermisches Durchgehen zumindest einer Batteriezelle (10) anzeigt,
Durchführen zumindest einer Gegenmaßnahme in Reaktion darauf, dass das Signal ein thermisches Durchgehen anzeigt, und
Stoppen des Durchführens der Gegenmaßnahme in Reaktion darauf, dass das andere Signal kein thermisches Durchgehen anzeigt.

11. Computerprogramm, aufweisend Anweisungen, die wenn das Programm von einer Steuerung (65) eines Systems zur Detektion von thermischem Durchgehen nach einem der Ansprüche 1 bis 5 ausgeführt wird, bewirken, dass die Steuerung die Schritte des Verfahrens nach Anspruch 10 durchführt.

## Revendications

1. Système de détection d'emballement thermique, comprenant :
un dispositif de mise à l'air libre (55) doté d'un corps d'étanchéité (551, 552, 553) disposé dans un passage de mise à l'air libre (555) à l'intérieur d'un boîtier (50, 53) de sous-module de batterie, de module de batterie ou de système de batterie renfermant au moins un élément de batterie (10), le corps d'étanchéité (551, 552, 553) étant configuré pour fermer le passage de mise à l'air libre (555) dans une première position et pour ouvrir le passage de mise à l'air libre (555) dans une seconde position différente de la première position, dans lequel le corps d'étanchéité (551, 552, 553) peut se déplacer de la première position à la seconde position de manière réversible ; et
un circuit de détection d'emballement thermique (60) configuré pour surveiller une position du corps d'étanchéité (551, 552, 553) et pour délivrer en sortie un signal correspondant à la position, le circuit de détection d'emballement thermique (60) comprenant :
un premier nœud de détection (63) connecté au dispositif de mise à l'air libre (55) et un second nœud de détection (64) connecté au dispositif de mise à l'air libre (55), dans lequel un chemin de conduction entre le premier nœud de détection (63) et le second nœud de détection (64) est rendu conducteur par le biais du corps d'étanchéité (551, 552, 553) dans l'une de la première position et de la seconde position, et
une unité de commande (65) configurée pour détecter la conductivité du chemin de conduction et pour délivrer en sortie le signal correspondant à la conductivité du chemin de conduction,
dans lequel le circuit de détection d'emballement thermique (60) comprend une première entrée de puissance (61) connectée à une première borne d'élément (11) de l'au moins un élément de batterie (10) et une seconde entrée de puissance (62) connectée à une seconde borne d'élément (12) de l'au moins un élément de batterie (10) et dans lequel le premier nœud de détection (63) est connecté à la première entrée de puissance (61) et le second nœud de détection (64) est connecté à la seconde entrée de puissance (62), et
dans lequel l'unité de commande (65) est connectée à la première entrée de puissance (61) et à la seconde entrée de puissance (62) et est alimentée par le biais de l'au moins élément de batterie (10).

2. Système de détection d'emballement thermique selon la revendication 1, dans lequel le dispositif de mise à l'air libre (55) est configuré pour passer de la première position à la seconde position lorsqu'une pression au sein du boîtier (50) dépasse un seuil de pression prédéfini.

3. Système de détection d'emballement thermique selon la revendication 1 ou 2, dans lequel le chemin de conduction entre le premier nœud de détection (63) et le second nœud de détection (64) est rendu conducteur par le biais du corps d'étanchéité (551, 552, 553) dans la première position et dans lequel le chemin de conduction est rendu non conducteur dans la seconde position.

4. Système de détection d'emballement thermique selon l'une quelconque des revendications précédentes, dans lequel l'unité de commande (65) est configurée pour délivrer en sortie le signal tandis que le chemin de conduction est rendu conducteur, ou dans lequel l'unité de commande (65) est configurée pour délivrer en sortie le signal lorsqu'un courant à travers le chemin de conduction chute au-dessous d'un seuil de courant prédéterminé.

5. Système de détection d'emballement thermique selon l'une quelconque des revendications précédentes, comprenant en outre une résistance de shuntage (67) qui est interconnectée entre la première entrée de puissance (61) et le premier nœud de détection (63) ou entre la seconde entrée de puissance (62) et le second nœud de détection (64) et dans lequel l'unité de commande (65) est configurée en outre pour détecter une chute de tension sur la résistance de shuntage (67).

6. Sous-module de batterie (20) comprenant une pluralité d'éléments de batterie alignés (10) et un boîtier de sous-module renfermant les éléments de batterie alignés (120) ainsi que le système de détection d'emballement thermique selon l'une quelconque des revendications 1 à 5, dans lequel le dispositif de mise à l'air libre (55) est disposé dans le passage de mise à l'air libre du boîtier de sous-module de batterie.

7. Module de batterie (50) comprenant une pluralité de sous-modules de batterie (20a, 20b) et un boîtier de module (53) ainsi que le système de détection d'emballement thermique selon l'une quelconque des revendications 1 à 5, dans lequel le dispositif de mise à l'air libre (55) est disposé dans le passage de mise à l'air libre (555) du boîtier de module de batterie (53).

8. Système de batterie, comprenant une pluralité de modules de batterie (50) et un boîtier de système ainsi que le système de détection d'emballement thermique selon l'une quelconque des revendications 1 à 5, dans lequel le dispositif de mise à l'air libre (55) est disposé dans le passage de mise à l'air libre du boîtier de système de batterie.

9. Véhicule comprenant un sous-module de batterie (20a, 20b) selon la revendication 6, un module de batterie (50) selon la revendication 7 et/ou un système de batterie selon la revendication 8 et comprenant en outre au moins une unité de commande de véhicule configurée pour recevoir le signal délivré en sortie par l'unité de commande (65) et au moins un moyen de sortie, dans lequel l'unité de commande de véhicule est configurée en outre pour commander le moyen de sortie afin de délivrer en sortie un avertissement à un passager sur la base du signal reçu.

10. Procédé permettant de détecter un emballement thermique d'au moins un élément de batterie (10) d'une pluralité d'éléments de batterie disposés au sein d'un boîtier (53), où un dispositif de mise à l'air libre (55) doté d'un corps d'étanchéité (551, 552, 553) est disposé dans un passage de mise à l'air libre (555) du boîtier (53), où le corps d'étanchéité (551, 552, 553) est configuré pour fermer le passage de mise à l'air libre (555) dans une première position et pour ouvrir le passage de mise à l'air libre (555) dans une seconde position différente de la première position, en réponse à une pression prédéfinie au sein du boîtier (53), où le corps d'étanchéité (551, 552, 553) peut se déplacer de la première position à la seconde position de manière réversible, et où le corps d'étanchéité (551, 552, 553) est configuré pour rendre conducteur un chemin de conduction dans le premier état ou le second état et pour rendre non conducteur le chemin de conduction dans l'autre état, le procédé comprenant les étapes consistant à :
détecter, par le biais d'une unité de commande (65) configurée pour détecter une conductivité du chemin de conduction, un état conducteur du chemin de conduction et délivrer en sortie un premier signal, et
détecter, par le biais de l'unité de commande (65) un état non conducteur du chemin de conduction et délivrer en sortie un second signal, où l'un du premier signal et du second signal indique un emballement thermique d'au moins un élément de batterie (10),
exécuter au moins une contre-mesure en réponse au signal indiquant un emballement thermique, et
mettre fin à l'exécution de la contre-mesure en réponse à l'autre signal n'indiquant pas d'emballement thermique.

11. Programme informatique comprenant des instructions qui, lorsque le programme est exécuté par une unité de commande (65) d'un système de détection d'emballement thermique selon l'une quelconque des revendications 1 à 5, amènent l'unité de commande à effectuer les étapes du procédé selon la revendication 10.
